Europäisches Patentamt

European Patent Office

Office européen des brevets

(19)

(11) Numéro de publication : **0 364 377 B1**

(12) ## FASCICULE DE BREVET EUROPEEN

(45) Date de publication du fascicule du brevet :
**01.09.93 Bulletin 93/35**

(51) Int. Cl.⁵ : **C08L 77/00,** C08K 3/32,
C08K 3/02, C08K 3/24,
C08K 3/26, C08K 3/30,
C08K 7/14

(21) Numéro de dépôt : **89420381.9**

(22) Date de dépôt : **09.10.89**

(54) Compositions à base de polyamide ignifugé.

(30) Priorité : **13.10.88 FR 8814298**

(43) Date de publication de la demande :
**18.04.90 Bulletin 90/16**

(45) Mention de la délivrance du brevet :
**01.09.93 Bulletin 93/35**

(84) Etats contractants désignés :
**AT BE CH DE ES FR GB GR IT LI LU NL SE**

(56) Documents cités :
EP-A- 0 129 805
EP-A- 0 141 763
FR-A- 2 332 306
GB-A- 2 075 989

(73) Titulaire : **RHONE POULENC CHIMIE**
**25 Quai Paul Doumer**
**F-92408 Courbevoie Cédex (FR)**

(72) Inventeur : **Bonin, Yves**
**4, rue du Général de Gaulle**
**F-69530 Brignais (FR)**
Inventeur : **Leblanc, Jack**
**38, avenue Clemenceau**
**F-69230 Saint-Genis-Laval (FR)**

(74) Mandataire : **Trolliet, Maurice et al**
**RHONE-POULENC CHIMIE Service Brevets**
**Chimie Centre de Recherches des Carrières**
**B.P. 62**
**F-69192 Saint-Fons Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet de nouvelles compositions à base de polyamide ignifugé au moyen de phosphore rouge destinées notamment à la fabrication d'articles pour les industries électrique et électronique. Plus particulièrement, elle concerne des compositions conduisant à des articles ignifugés présentant un bon compromis de propriétés en particulier en matière de résistance au feu, de résilience, de résistance au cheminement de l'arc et d'aspect de surface.

On sait que l'adjonction de phosphore rouge dans des compositions à base de polyamide permet d'atteindre un degré élevé d'ignifugation.

Dans le brevet américain US-A-3.883.475, on a décrit des compositions à base de polyamide ignifugé dans lesquelles on a cherché à inhiber le dégagement de phosphine très toxique, qui se forme à la suite d'une réaction de dismutation du phosphore rouge sous l'action des traces d'eau présentes dans le polymère et de la chaleur élevée nécessaire à sa transformation, par addition dans la composition d'un composé métallique consistant avantageusement dans l'oxyde cuivrique.

Dans le brevet français FR-A-2.367.100, on a proposé une amélioration consistant à faire appel à de l'oxyde de cadmium à la place du CuO ; l'oxyde de cadmium en plus de son efficacité (au moins égale à celle de CuO) pour inhiber le dégagement de phosphine, conduit en outre à des articles présentant une résistance au cheminement de l'arc (au sens de la norme NF C 26220) particulièrement élevée, égale ou supérieure à 400 volts dans le cas de compositions non chargées et à 375 volts dans le case de compositions chargées avec environ 40 % en poids de fibres de verre par rapport au poids du polyamide des compositions.

Dans le brevet français FR-A-2.553.783, on a proposé un produit de remplacement de l'oxyde de cadmium (qui présente une certain toxicité) consistant dans un composé à base de lanthanide. Avec cet adjuvant, les compositions à base de polyamide ignifugé obtenues conduisent à des articles présentant un compromis de propriétés en particulier en matière d'ignifugation, de résilience et de résistance au cheminement de l'arc qui est meilleur que celui lié à emploi de l'oxyde de cadmium.

Cependant, il reste encore à résoudre un problème touchant à l'apparition et au développement, à un degré variable, de taches blanchâtres (exsudations blanchâtres) sur la surface des articles ignifugés à l'aide de phosphore rouge, lorsque ces articles sont soumis au double effet d'une température élevée et de l'humidité. Une pareille altération des articles considérés se rencontre par exemple dans les pays tropicaux chauds et humides.

Poursuivant des travaux dans ce domaine de la technique et cherchant en particulier à améliorer encore les compositions ignifugées conformes à l'enseignement du brevet français précité FR-A-2.553.783, la demanderesse a maintenant trouvé que le phénomène d'apparition et de développement de taches, dont on vient de parler, peut être contrarié, sans inconvénient sensible par ailleurs sur les valeurs des propriétés en matière d'ignifugation, de résilience et de résistance au cheminement de l'arc, en faisant appel à un stabilisant judicieusement choisi consistant dans une hydrotalcite.

Plus précisément, la présente invention concerne des compositions à base de polyamide ignifugé au moyen de phosphore rouge et comprenant au moins un composé à base de lanthanide ou d'yttrium, caractérisées en ce qu'elles comprennent en outre une quantité efficace comprise entre 0,1 et 5 % en poids par rapport au poids du polyamide contenu dans la composition, d'au moins une hydrotalcite de formule générale :

$$Mg_{(1-a)}Al_a(OH)_2\,A_{a/2},\ pH_2O \qquad (I)$$

dans laquelle :

. A représente l'anion $SO_4^{2-}$ ou $CO_3^{2-}$,

. a est un nombre qui satisfait à la relation :

$$0 < a < 0,5\,,$$

. p est un nombre, représentant le nombre de molécules d'eau par molécule d'hydrotalcite, qui satisfait à la relation :

$$0 < p < 1.$$

Parmi les hydrotalcites de formule (I), on préférera les hydrotalcites dans laquelle A représente $CO_3^{2-}$. Plus préférentiellement encore, on utilisera les hydrotalcites de formule (I) dans laquelle A représente $CO_3^{2-}$ et a est un nombre qui satisfait à la relation $0,2 < a < 0,4$.

Ces hydrotalcites comprennent les hydrotalcites naturelles et les hydrotalcites obtenues par traitement des hydrotalcites naturelles. Ces hydrotalcites sont notamment décrites dans le brevet français FR-A-2.483.934.

Les polyamides à ignifuger visés dans la présente invention comprennent : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide $\omega$-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

A titre d'illustration des polyamides obtenus par polycondensation de diacides et de diamines, on citera par exemple : le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique), le nylon 6,12 (polymère d'hexaméthylènediamine et d'acide dodécanedioïque).

A titre d'illustration des polyaminoacides qui peuvent convenir, on citera : le nylon 4 (polymère d'acide amino-4 butanoïque ou de γ-butyrolactame), le nylon 5 (polymère d'acide amino-5 pentanoïque ou de δ-amylolactame), le nylon 6 (polymère d' ε-caprolactame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), le nylon 11 (polymère d'acide amino-11 undécanoïque), le nylon 12 (polymère d'acide amino-12 dodécanoïque ou de laurolactame).

A titre d'illustration des copolyamides, on citera par exemple : le nylon 6,6/6,10 (copolymère d'hexaméthylènediamine, d'acide adipique et d'acide sébacique), le nylon 6,6/6 (copolymère d'hexaméthylènediamine, d'acide adipique et de caprolactame).

Les polyamides à ignifuger qui sont tout spécialement visés dans la présente invention sont le nylon 6,6, le nylon 6,10, le nylon 6, le nylon 6,6/6,10 et le nylon 6,6/6.

L'expression "phosphore rouge" au sens de la présente invention désigne les diverses variétés allotropiques colorées du phosphore (phosphore rouge, violet ou noir) commercialisées sous l'appellation de phosphore rouge.

La quantité de phosphore rouge est généralement comprise entre 1 et 30 % en poids par rapport au poids du polyamide à ignifuger. De préférence cette quantité est comprise entre 2 et 15 % en poids. De manière plus préférentielle encore, cette quantité est comprise entre 6 et 12 %. D'une manière générale, il est souhaitable d'utiliser le phosphore rouge sous forme finement divisée, par exemple sous forme de particules de diamètre moyen n'excédant pas 200 µm et de préférence compris entre 1 et 100 µm.

Dans le présent mémoire on appellera lanthanide, les métaux de la classification périodique des éléments ayant numéros atomiques allant de 57 à 71 ainsi que l'yttrium qui possède des propriétés voisines bien qu'ayant un numéro atomique de 39.

L'expression "composé à base de lanthanide ou d'yttrium" donnée ci-avant signifie :
- un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium et d'yttrium ; l'expression "au moins un composé à base de lanthanide ou d'yttrium" signifie alors que l'on peut engager, outre un seul dérivé, un mélange de dérivés organiques ou un mélange de dérivés inorganiques ou un mélange de dérivés organiques et inorganiques de l'un quelconque des éléments précités ;
- un mélange de dérivés organiques et/ou inorganiques de plusieurs de ces lanthanides ; l'expression "au moins un composé à base de lanthanide" signifie que l'on peut engager, outre un seul mélange, une association de plusieurs mélanges de ce type.

En général, en raison des quantités relatives des composés des divers lanthanides dans les minerais les plus courants, notamment dans la monazite et la bastnaesite, lorsque l'on met en oeuvre un dérivé d'un seul lanthanide, ce dernier est de préférence le cérium, le lanthane, le praséodyme et néodyme. Le cérium et le lanthane sont, parmi ces métaux, les plus abondants et conviennent tout particulièrement bien.

Des mélanges de dérivés de plusieurs lanthanides peuvent aussi être utilisés. Il peut en effet être avantageux de ne pas procéder à la séparation longue et coûteuse de tous les lanthanides présents en relativement faibles quantités dans les minerais couramment traités. En pareil cas, on fait appel généralement aux mélanges suivants :
- mélange de dérivés du cérium et d'un ou plusieurs des autres lanthanides;
- mélange de dérivés de lanthane et d'un ou plusieurs autres lanthanides choisis parmi le praséodyme, le néodyme, le prométhium, le samarium, l'europium, le gadolinium, le terbium, le dysprosium, l'holmium, l'erbium, l'ytterbium, le thulium, le lutétium et l'yttrium ;
- mélange de dérivés du praséodyme et d'un ou plusieurs autres lanthanides choisis parmi le néodyme, le prométhium, le samarium, l'europium, le gadolinium, le terbium, le dysprosium, l'holmium, l'erbium, l'ytterbium, le thulium, le lutétium et l'yttrium ;
- mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium ou l'yttrium.

Quand de tels mélanges de dérivés de plusieurs lanthanides sont mis en oeuvre dans les compositions selon l'invention, le cérium et/ou le lanthane et/ou la praséodyme et/ou le néodyme représentent généralement

EP 0 364 377 B1

au moins 40 % en moles du total des lanthanides.

Par dérivé organique de lanthanide, on entend plus particulièrement les sels des divers acides carboxyliques, les dérivés métalliques des composés phénoliques, les mercaptides et les chélates des composés β-dicarbonylés.

Plus précisément, les dérivés organiques de lanthanide sont choisis parmi :

- les sels de lanthanide :
  + des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone ;
  + des acides benzoïques, naphtoïque-1, naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone ;
  + des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;
  + des acide carboxyliques hétérocycliques notamment ceux dérivés de la pyridine, du furanne, du thiophène, du pyrrole et du pyranne, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone ;
- les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbon, alkényles ayant 2 à 24 atomes de carbone, phényle, benzyle, phénoxy ou cyclohexyle ;
- les mercaptides de lanthanide notamment ceux qui dérivent des acides thioglycolique ou thiomalique et de leurs esters d'alkyle, (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone ;
- les chélates de lanthanide de composés β-dicarbonylés notamment ceux qui dérivent des composés de formule générale (II) :

$$R_1 - CO - CHR_2 - CO - R_3 \qquad (II)$$

dans laquelle :
- $R_1$ et $R_3$, identiques ou différents, représentent :
  + un groupement alkyle, linéaire ou ramifié, ayant 1 à 36 atomes de carbone, éventuellement substitué par un ou des atomes d'halogènes,
  + un groupement alkényle, linéaire ou ramifié, ayant 3 à 36 atomes de carbone, éventuellement substitué par un ou des atomes d'halogènes,
  + un radical aryle ou un radical aryle portant sur le cycle aromatique un ou plusieurs substituants tels que :
    . les radicaux alkyles ayant 1 à 6 atomes de carbone, éventuellement substitués par un ou des atomes d'halogènes,
    . les radicaux alkényles ayant 2 à 6 atomes de carbone, éventuellement substitués par un ou des atomes d'halogènes,
    . le groupement nitro,
    . le groupement - CHO,
    . le groupement -COOH,
    . les groupements alkoxy ayant 1 à 6 atomes de carbone,
    . les groupements -COOR$_4$, $R_4$ étant un radical alkyle ayant 1 à 12 atomes de carbone ou alké-

4

nyle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles - CO - ou carboxylates - COO - ;

- $R_2$ représente un atome d'hydrogène.

Parmi les dérivés organiques de lanthanide utilisables dans les compositions selon l'invention, on choisit fréquemment, en particulier pour des raisons pratiques ou pour des raisons économiques de disponibilité ou de prix :

- les sels de lanthanide :

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone ;

+ des acides mercaptomonocarboxyliques ayant de 2 à 6 atomes de carbone ou mercaptodicarboxyliques ayant de 3 à 6 atomes de carbone ;

+ des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone ;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone ;

- les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

A titre d'exemples non limitatifs de dérivés organiques des lanthanides, on peut citer :

- les sels de lanthanide, notamment de cérium, de lanthane, de praséodyme et de néodyme, des acides propionique, hexanoïques, n.octanoïque, éthyl-2-hexanoïque, isooctanoïque, nonanoïques, décanoïques, laurique, stéarique, oléique, ricinoléïque, margarique, tétradécanoïques, hydroxy-12 stéarique, docosanoïques, docosène-13-oïque (acide érucique), chloro-2 décanoïque, octyl-2 décanoïque, hydroxy-2 hexanoïque, thioglycolique, mercaptopropionique, thiomalique, cyclohexyl-6 hexanoïque, benzoïque, phénylacétique, phényl-2 propanoïque, méthyl-2 benzoïque, méthyl-4 benzoïque, phénoxy-2 benzoïque, propyl-4 benzoïque, méthoxy-4 benzoïque, tertiobutyl-4 benzoïque, salicylique, tertiobutyl-5 salicylique, hydroxy-4 méthoxy-3 benzoïque, diméthoxy-3,4 benzoïque, naphtoïque-1, naphtoïque-2, cyclohexane-carboxylique, nicotinique, isonicotinique, méthyl-4 furanne-carboxylique-3, du maléate de monoisooctyle, du maléate de mono(éthoxy-2 éthyle), du phtalate de monobutyle, du thiomalate de monobutyle, du thiomalate de monohexyle ;

- les phénolates de lanthanides, notamment de cérium, de lanthane, de praséodyme et de néodyme des composés phénoliques suivants : phénol, crésols, éthylphénols, xylénols, butylphénols, isopentylphénols, isooctylphénols, tertiononylphénols, décylphénols, dodécylphénols, tertiooctylphénols, cyclohexyl-4 phénol, phényl-4 phénol, ditertiononylphénols, méthyl-isohexylphénols ;

- les chélates de lanthanides, notamment de cérium, de lanthane, de praséodyme et de néodyme des β-dicétones suivantes : l'heptanedione-2,4 ; la décanedione-2,4 ; la Oéthyl-2 décène-2-dione-6,8 ; la méthyl-2 nonène-2 dione-6,8 ; la stéaroylacétone ; la stéaroyl-1 octanone-2 ; le dioxo-7,9 décanoate d'éthyle ; la benzoylacétone ; l'acétylacétone ; la benzoyl-1 octanone-2 ; la diphényl-1,4 butanedione-1,3 ; la stéaroylacétophénone ; la palmitoylacétophénone ; benzoyl-1 méthyl-4 pentanone ; le benzoyloctacosanoyl-méthane ; le paraméthoxybenzoyl-stéaroylméthane ; le dibenzoylméthane ;

- les mercaptides de lanthanides, notamment de cérium, de lanthane, de praséodyme et de néodyme de l'acide thioglicolique, du thioglycolate d'isooctyle, du thioglycolate d'octadécyle, du thioglycolate de benzyle, du thioglycolate de lauryle, du dithioglycolate de cyclohexanediol-1,4, du thioglycolate de tertiobutyl-4 cyclohexyle, de l'acide thiomalique, du thiomalate d'hexyle, du thiomalate d'éthyl-2 hexyle, du thiomalate de dodécyle, du thiomalate de benzyle, du thiomalate de cyclohexyle, du thiomalate de propanediol-1,3, du thiomalate de butanediol-1,4, du thiomalate d'hexanediol-1,6.

Les dérivés organiques des lanthanides, qui ne sont pas directement disponibles, sont préparés par des méthodes classiques, telles que la réaction d'un acide carboxylique ou de son anhydride, d'un composé phénolique, d'un acide mercaptocarboxylique (ou d'un de ses esters) ou d'une β-dicétone sur un oxyde ou un hydroxyde de lanthanide, ou selon le cas sur un mélange de tels oxydes ou hydroxydes, dans un milieu solvant approprié et en chauffant si nécessaire.

Par dérivé inorganique de lanthanide, on entend plus particulièrement les oxydes, les hydroxydes, les sels d'hydracides minéraux et les sels d'oxyacides minéraux.

Plus précisément, on utilise par exemple comme sels de lanthanide d'hydracides minéraux : les chlorure, bromure, iodure, sulfure, séléniure et tellurure ; comme sels de lanthanide d'oxyacides minéraux : les sulfite, sulfate, sulfonate, nitrite, nitrate, phosphite, phosphate, pyrophosphate, carbonate, perchlorate, antimoniate, arséniate, sélénite, sélénate, vanadate et tungstate.

Parmi les dérivés inorganiques de lanthanide utilisables dans les compositions selon l'invention, on choisit fréquemment, en particulier pour des raisons pratiques ou pour des raisons économiques de disponibilité ou de prix, les oxydes, les chlorures, les sulfates ou les nitrates de lanthanide.

Dans les dérivés de lanthanide utilisés dans les compositions selon l'invention, le lanthanide peut se trouver aux différents degrés d'oxydation qu'il possède éventuellement ; le plus féquemment, il se trouve aux degrés d'oxydation III ou IV.

Conformément à une mise en oeuvre très préférentielle de la présente invention, on fait appel à une quantité efficace d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III.

La quantité de composé(s) à base de lanthanide mise en oeuvre peut varier dans de très larges limites. Plus précisément, cette quantité est déterminée de manière à apporter de $0,1.10^{-3}$ à $100.10^{-3}$ atome-grammes de métal appartenant au groupe des lanthanides pour 100 g de polyamide. De préférence, cette quantité est déterminée de manière à apporter de $0,2.10^{-3}$ à $30.10^{-3}$ atomes-grammes de métal du groupe des lanthanides pour 100 g de polyamide. De manière plus préférentielle encore, cette quantité est déterminée de manière à apporter de $0,3.10^{-3}$ à $10.10^{-3}$ atome-grammes de métal du groupe des lanthanides pour 100g de polyamide.

Le composé à base de lanthanide peut se présenter sous une forme solide ou pâteuse. Dans le cas d'un composé solide, ce dernier est utilisé en général sous forme de particules de diamètre moyen n'exédant pas 200 μm et, de préférence, compris entre 0,5 et 100 μm.

Comme il est indiqué ci-avant, les compositions conformes à la présente invention doivent renfermer en outre une quantité efficace d'au moins une hydrotalcite de formule (I). Ces composés minéraux sont utilisés en général sous forme de particules de diamètre moyen n'excédant pas là non plus 200 μm et, de préférence, compris entre 0,1 et 100 μm.

Quand le composé utilisé (composé à base de lanthanide, hydrotalcite) est disponible sous forme anhydre ou sous forme cristallisée avec des molécules d'eau, on préfère mettre en oeuvre le composé anhydre ou renfermant le moins possible d'eau de cristallisation pour éviter ou limiter un dégagement d'eau lors de la transformation.

La quantité d'hydrotalcite(s) mise en oeuvre peut varier dans des limites assez larges en fonction du degré de stabilisation souhaité ; plus précisément, cette quantité est comprise entre 0,1 et 5 % en poids par rapport au poids du polyamide contenu dans la composition et, de préférence, entre 0,4 et 2 % en poids.

Les compositions conformes à la présente invention peuvent être préparées par simple mélange des divers constituants de toutes les manières appropriées permettant d'obtenir une composition homogène. De manière préférentielle, on réalise le mélange des divers constituants sous forme de poudre ou de granulés en opérant d'abord à froid un pré-mélange dans un mélangeur classique, puis en homogénéisant ensuite l'ensemble par un malaxage à chaud à une température généralement supérieure à 200C° dans une extrudeuse à une ou plusieurs vis en opérant de préférence l'extrusion sous atmosphère inerte comme par exemple de l'azote ou de l'argon. A l'issue de ce traitement on obtient des joncs qui sont refroidis à l'eau puis découpés en granulés, ces derniers pouvant éventuellement être soumis ensuite à un séchage. Les compositions selon l'invention peuvent être préparées encore en confectionnant un mélange-maître, présenté sous forme de granulés à base d'une partie du polyamide à ignifuger, de phosphore rouge, du composé à base de lanthanide et d'hydrotalcite(s) qui sera mélangé ensuite, avant mise en oeuvre, avec des granulés du reste du polyamide à ignifuger.

Ces compositions ont été définies ci-dessus par leurs constituants essentiels. Il va sans dire que l'on ne

EP 0 364 377 B1

sortirait pas du cadre de l'invention en modifiant ces compositions de la manière indiquée ci-après. Ainsi, s'agissant par exemple du phosphore rouge, on peut soit utiliser le phosphore rouge tel quel, soit utiliser, et il s'agit là d'une mesure préférentielle, des particules de phosphore rouge enrobées au moyen d'une pellicule de polymère. Parmi ces polymères, on peut citer notamment : les résines époxy (cf. brevet français FR-A-2.314 221), des polymères ayant des liaisons insaturées maléiques, fumariques ou allyliques (cf. brevet français FR-A-2.314 219), des polyesters saturés de point de fusion compris entre 50° et 90°C et de masse moléculaire inférieure à 10 000 (cf. brevet français FR-A-2.373 575), des polycondensats phénol-formaldéhyde thermoplastiques de type novolaque (cf. brevet français FR-A-2.344 615), des polycondensats phénol-isobutyraldéhyde thermoplastiques (cf. demande de brevet européen EP-A-0071788) ; l'emploi des polycondensats phénol-formaldéhyde thermoplastiques constitue une mesure particulièrement préférée pour la mise en oeuvre de la présente invention. La quantité de polymère mise en oeuvre pour enrober le cas échéant les particules de phosphore peut varier entre de larges limites. Généralement cette quantité représente 5 à 50 % du points total du mélange phosphore rouge/polymère enrobant. A noter que l'on peut utiliser sans inconvénient des quantités de polymère enrobant plus importantes allant jusqu'à représenter 90 % du poids total du mélane phosphore rouge/polymère enrobant.

Par ailleurs, les compositions selon l'invention, quand elles sont destinées par exemple à l'obtention d'objets conformés, peuvent renfermer divers additifs : elles peuvent ainsi contenir des charges renforçantes ou gélifiantes telles que des fibres de verre ou d'amiante, des microbilles de verre, du kaolin, de la silice, des micas, des bentonites, des bentones ou des mélanges de ces espèces. Parmi les charges précitées, les plus couramment utilisées sont les fibres de verre ; ces fibres ont en général un diamètre moyen compris entre 1 et 15 µm et une longueur comprise entre 2 et 8 mm. Il est avantageux, pour obtenir des articles doués de propriétés mécaniques optimales, d'utiliser des fibres ensimées, par exemple au moyen de résines époxy, de résines polyesters, de résines polyuréthannes ou de résines vinyliques, ces résines étant généralement associées à des agents de pontage du type aminosilane. Les proportions de charges peuvent varier entre par exemple 10 % et 60 % en poids par rapport au poids du polyamide de la composition.

On peut également faire appel à d'autres additifs tels que des lubrifiants, des agents renforçateurs de chocs, des pigments ou colorants, des agents antistatiques, des agents de cristallisation : ces derniers additifs ainsi que leur emploi sont largement décrits dans la littérature.

Les compositions conformes à l'invention peuvent être transformées en articles finis ou semi-finis par application des techniques habituelles d'injection ou d'extrusion. Un des avantages de ces compositions réside dans le fait que cette transformation qui s'effectue en général à une température de l'ordre de 200 à 320°C ne s'accompagne que d'une très faible émission dans l'atmosphère d'hydrogène phosphoré : celle-ci est en général inférieure à 0,3 ppm et même à 0,1 ppm ; la borne de 0,3 ppm représente la concentration maximale à ne pas dépasser (cf. l'ouvrage Sax, Dangerous properties of industrial materials, 3ème édition, pages 1019 et 1020). Pour des teneurs en phosphore adéquates, les articles obtenus sont résistants au feu et ils ne conduisent pas, sous l'action d'une flamme, à la formation de gouttelettes de matière fondue, éventuellement enflammée. La combustibilité selon le test des "Underwriters Laboratories" UL 94 vertical (pour des éprouvettes d'une épaisseur de 1,6 mm) se situe dans la zone de classement allant de V0 à V1. Les articles obtenus présentent une excellente résistance au cheminement d'arc qui peut être bien supérieure à 400 volts dans le cas de compositions chargées avec par exemple environ 40 % en poids de fibres de verre par rapport au poids du polyamide des compositions. On constate encore que les articles ignifugés obtenus présentent aussi une excellente résilience qui, au départ de compositions chargées avec par exemple environ 40 % en poids de fibres de verre par rapport au poids du polyamide des compositions, peut atteindre et dépasser 24 kJ/m2 en choc Charpy lisse. Les performances enregistrées en matière d'ignifigation et de résilience sont sensiblement du même ordre que celles obtenues en absence d'hydrotalcite. Par contre, en ce qui concerne la résistance au cheminement d'arc et la tenue au vieillissement en atmosphère chaude et humide, on constate que les performances enregistrées sont supérieures. En particulier, en ce qui a trait aux exsudations blanchâtres qui se manifestent lors du vieillissement des articles ignifugés en atmosphère chaude et humide, on note qu'avec les compositions selon la présente invention, ce phénomène est très nettement contrarié par rapport à ce qui se passe en absence d'hydrotalcite ou avec d'autres systèmes stabilisants de nature différente.

Les compositions ignifugées selon la présente invention conviennent particulièrement bien pour l'obtention d'articles conformés utilisables dans les industries de l'électricité (par exemple industries électrique et électronique, électroménager, radio, automobile). Les caractéristiques de ces compositions permettent également de confectionner des articles par filage et filmage.

Les exemples non limitatifs suivants montrent comment la présente invention peut être mise en oeuvre pratiquement.

Avant de décrire ces exemples, on va montrer à l'aide de l'essai A décrit ci-après quel est le comportement d'une composition témoin comprenant :

7

- du nylon 6,6,
- du phosphore rouge enrobé au moyen d'un polycondensat phénol-formaldéhyde,
- des fibres de verre,
- du stéarate de cérium III, et
- un lubrifiant,

en matière d'ignifugation, de résilience, de résistance au cheminement de l'arc et de tenue au vieillissement en atmosphère chaude et humide.

ESSAI A

1. Description des matières premières :

- nylon 6,6 (polymère d'hexaméthylénediamine et d'acide adipique) : il s'agit d'un produit présentant un indice de viscosité de 133 ml/g (déterminé selon la norme ISO R 307, édition de 1977, sur la partie soluble dans l'acide formique à 90 %) ;
- phosphore rouge enrobé : il s'agit d'une composition, qui sera désignée dans la suite par l'expression mélange-maître phosphore, contenant 60 % en poids de phosphore rouge ayant une granulométrie moyenne de 20 à 30 $\mu$m enrobé par 40 % en poids d'un polycondensat phénolformaldéhyde ayant un point de fusion de 80°C et un poids moléculaires de 800 (résine commercialisée par la Société BAKELITE sous la référence 85 36 29). Cet enrobage est effectué comme suivant : on fait fondre la résine dans un réacteur chauffé à 120°C par la vapeur d'eau et on ajoute le phosphore rouge, lentement, sous atmosphère inerte en montant la température du mélange à 148°C. Le mélange est ensuite coulé sous forme de plaques que l'on casse en fragments sous atmosphère inerte ;
- fibres de verre : il s'agit de fibres courtes ayant un diamètre moyen de 10 $\mu$m et une longueur comprise entre 3 et 6 mm, comportant un ensimage pour polyamide, commercialisées par la Société OWENS CORNING FIBERGLAS sous la référence R 17 BX 1.
- stéarate de cérium III [Ce $(C_{17} H_{35} COO)_3$] : il est utilisé en mélange avec du polysébacate d'éthylèneglycol et un liant à base du nylon 6,6 précité ; ce mélange, désigné dans la suite par l'expression mélange-maître lanthanide, contient : 38,06 % en poids de stéarate de cérium III, 13,27 % en poids de polysébacate d'éthylèneglycol et 48,67 % en poids de nylon 6,6.

2. Contenu de cet essai :

On prépare une composition à partir de :
- 100 parties en poids de nylon 6,6,
- 39,75 parties en poids de fibres de verre,
- 17,49 parties en poids de mélange-maître phosphore (phosphore rouge : 10,49 parties en poids), et
- 1,79 parties en poids de mélange-maître lanthanide (stéarate de cérium III : 0,681 partie en poids et $0,683.10^{-3}$ atome-grammes de cérium/100 g de nylon).

3. Mode opératoire général et contrôles effectués :

La composition est préparé de la manière suivante :

On réalise d'abord un pré-mélange à sec, à 25°C, des divers constituants par passage dans un mélangeur de marque Moritz.

Ce pré-mélange est ensuite malaxé à l'état fondu dans une extrudeuse-dégazeuse de marque Prodex comportant une vis de diamère D égal à 63 mm et de longueur égale à 26 D ; la vis utilisée est une vis cylindro-conique ayant un profil adapté pour le travail des polyamides ; de l'argon est introduit en continu dans la trémie d'alimentation de l'extrudeuse-dégazeuse ; l'extrudeuse est equipée par ailleurs d'une filière à deux trous de 5 mm de diamètre ; les conditions de l'extrusion sont les suivantes :
- température      : 320°C
- vide      : $93,1.10^2$ Pa
- vitesse de la vis      : 50 tours/min.

On note la pression matière en bout de vis et le débit matière. Le produit recueilli sous forme de joncs est refroidi par passage dans un bain d'eau froide, puis il est granulé et séché.

Sur la poudre à mouler ainsi obtenue, on détermine la teneur en eau et l'indice de viscosité du nylon 6,6.

Pour déterminer l'indice de viscosité, le temps de dissolution dans l'acide formique, pour obtenir une dissolution complète, est habituellement de 2 heures à 25°C.

On détermine encore l'indice de viscosité du nylon 6,6, mais cette fois, sur éprouvette moulée. Ces éprouvettes sont préparées à l'aide d'une presse à vis de marque DK, type 60. Dans cette presse, les granulés de la poudre à mouler sont fondus à une température de 280°C à 300°C (selon le type d'éprouvette), tandis que le moule est maintenu à une température de 80°C ; la pression d'injection est de 80 MPa à 100 MPa (selon le type d'éprouvette) ; la durée du cycle d'injection est de 17s à 25s (selon le type d'éprouvette).

Sur des éprouvettes moulées dans les conditions indiquées ci-avant, on détermine les autres caractéristiques suivantes :

- la résilience consistant dans la résistance au choc Charpy : elle est mesurée à 23°C sur des éprouvettes lisses et entaillées de type barreau de 60 x 10 x 4 mm, conditionnées de manière connue en soi à EHO (= 0 % d'humidité relative) ou EH 50, selon la norme NF T 51 035 ; les résultats sont exprimés en kJ/m2 ;
- la combustibilité selon le test des "Underwriters Laboratories" UL94 vertical, tel que décrit dans le document 9750-1 du Bureau des Normalisations des Matières Plastiques, pour mesurer le degré d'ignifugation ; dimensions des éprouvettes : 127 x 12,7 x 1,6 mm ;
- l'indice de résistance au cheminement d'arc (en abréviation IRC) selon la norme NF C 26 220 ; les mesures sont effectuées sur des éprouvettes de dimensions 50 x 50 x 3 mm ;
- et la tenue du vieillissement en atmosphère chaude et humide, appelée dans ce qui suit : test de tropicalisation.

Le test de tropicalisation est conduit en s'inspirant des conditions de la norme NF T 51181 (cycle d'essai C 3 A). Dimensions des éprouvettes : 100 x 100 x 3 mm. Mode opératoire : les éprouvettes sont disposées verticalement dans un dessicateur de 20 litres contenant 1500 cm3 d'une solution aqueuse d'acide sulfurique renfermant 15 % en poids d'acide pur de manière à obtenir une humidité relative de 93 % ;

deux éprouvettes servant de cache sont placées sur la périphérie du dessicateur ; entre les éprouvettes servant de cache, on dispose d'une part deux éprouvettes moulées à partir d'une composition à tester (en l'occurence, celle conforme à l'exemple donné ci-après) et d'autre part deux éprouvettes moulées à partir d'une composition de référence (en l'occurence, celle conforme au présent essai A) ; le dessicateur est placé ensuite dans une étuve chauffée à 70°C pendant 8 heures, puis le chauffage de l'étuve est arrêté, la porte de l'étuve est ouverte et on laisse refroidir le dessicateur et son contenu dans ces conditions pendant 16 heures ; l'ensemble : chauffage 8 heures à 70°C + refroidissement 16 heures à la température ambiante constitue 1 cycle de vieillissement ; les résultats de l'aspect de surface des éprouvettes sont notés au bout de 17 cycles. Notation des résultats : cette notation va de 0 à 10 : le chiffre 0 indique qu'il n'y a pas d'exudation ; le chiffre 10 indique que l'éprouvette est entièrement couverte de taches blanchâtres ; la notation prend en compte l'étendue et l'intensité des exudations blanchâtres.

Par ailleurs, on effectue en cours d'extrusion, à la sortie de la pompe à vide, des prélèvements d'air au moyen d'un tube Draeger CH 31 101 pour rechercher la présence éventuelle d'hydrogène phosphoré.

4. Résultats de l'essai A :

Les résultats obtenus sont rassemblés dans le tableau 1 donné ci-après.

EXEMPLE

1. Contenu de cet exemple :

Cette partie expérimentale va permettre de situer le comportement d'une composition à base de polyamide et de fibres de verre, ignifugée au moyen de phosphore rouge enrobé et renfermant du stéarate de cérium III ainsi qu'un lubrifiant, dans laquelle on incorpore en outre une hydrotalcite de formule :

$$Mg_{0,7} Al_{0,3} (OH)_2 (CO_3)_{0,15} , 0,5 H_2O$$

distribuée dans le commerce par le Société MITSUI sous la dénomination ALCAMIZER.

Plus précisément, on introduit, dans la composition conforme à celle de l'essai A, une quantité d'hydrotalcite représentant (compte tenu du polyamide contenu dans le mélange-maître lanthanide) 0,79 % en poids par rapport au nylon 6,6 contenu dans la composition.

On a donc préparé la composition obtenue à partir des constituants suivants :

- 100 parties en poids de nylon 6,6,
- 40,06 parties en poids de fibres de verre,
- 17,63 parties en poids de mélange-maître phosphore (phosphore rouge : 10,58 parties en poids),
- 1,81 parties en poids de mélange-maître lanthanide (stéarate de cérium III : 0,688 parties en poids et 0,689.10$^{-3}$ atome-grammes de cérium/100 g de nylon),
- 0,80 partie en poids d'hydrotalcite.

Dans cet exemple le nylon 6,6, les fibres de verre, le mélange-maître phosphore et le mélange-maître lanthanide sont identiques aux constituants mis en oeuvre dans l'essai A. S'agissant de l'hydrotalcite nouvellement introduite, sa dispersion granulométrique est la suivante : 100 % de particules de moins de 5 μm.

2. <u>Mode opératoire général et contrôles effectués</u> :

La préparation de la composition est opérée de la manière indiquée ci-avant au paragraphe 3 de la description de l'essai A. A noter que les conditions de marche de l'extrusion sont ici les suivantes :
- température       : 320°C
- vide       : 93,1.10$^2$ Pa
- vitesse de la vis       : 50 tours/min.

S'agissant des contrôles effectués, on détermine les différentes caractéristiques physico-mécaniques mentionnées ci-avant au paragraphe 3 de la description de l'essai A. A noter que pour faire les éprouvettes moulées, on reprend les conditions indiquées au paragraphe 3 de la description de l'essai A.

3. <u>Résultats de l'exemple</u> :

Les résultats obtenus sont rassemblés dans le tableau 1 donné ci-après.

## TABLEAU 1

| EXEMPLE ESSAI | EXTRUSION | | | POUDRE A MOULER | | | CHOC CHARPY | | Classement UL94 épaisseur 1,6mm | IRC | | Indice de viscosité sur éprouvettes moulées ml/g | Tropicalisation 17 cycles |
|---|---|---|---|---|---|---|---|---|---|---|---|---|---|
| | Pression matière bout de vis MPa | Débit matière kg/h | Dégagement $PH_3$ ppm | Taux phosphore calculé % | Teneur en eau % | Indice de viscosité ml/g | LISSE EHO kJ/m2 | ENTAILLE EH 0 KJ/m2 | | Voltage V | Erosion mm | | |
| A | ∿ 20 | 35 | < 0,2 | 10,39 | 0,15 | 142 | 26 | 8 | V-O | 375 | 0,1 | 130 | 7 |
| Exemple | ∿ 20 | 35 | < 0,1 | 10,48 | 0,19 | 136 | 24 | 7,6 | V-1 | 450 | 0,1 | 120 | 2 |

EP 0 364 377 B1

**Revendications**

**Revendications pour les Etats contractants suivants : AT, BE, CH, DE, FR GB, GR, IT, LI, LU, NL, SE**

1. Compositions à base de polyamide ignifugé au moyen de phosphore rouge et comprenant au moins un composé à base de lanthanide ou d'yttrium, caractérisées en ce qu'elles comprennent en outre de 0,1 à 5 % en poids par rapport au poids du polyamide contenu dans la composition d'au moins une hydrotalcite de formule générale :

$$Mg_{(1-a)}Al_a(OH)_2 \; A_{a/2}, \; pH_2O \qquad (I)$$

dans laquelle :
   . A représente l'anion $SO_4^{2-}$ ou $CO_3^{2-}$,
   . a est un nombre qui satisfait à la relation :
      $0 < a < 0,5$,
   . p est un nombre, représentant le nombre de molécules d'eau par molécule d'hydrotalcite, qui satisfait à la relation :
      $0 < p < 1$.

2. Compositions selon la revendication 1, caractérisées en ce que le polyamide est choisi dans le groupe constitué par : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide ω -aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

3. Compositions selon l'une quelconque des revendications 1 à 2, caractérisées en ce que le composé à base de lanthanide et d'yttrium consiste dans :
   - un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium ou d'yttrium ;
   - ou un mélange de dérivés organiques et/ou inorganiques de plusieurs de ces éléments.

4. Compositions selon l'une quelconque des revendications 1 à 3, caractérisées en ce que la quantité de composé(s) à base de lanthanide et d'yttrium mise en oeuvre est déterminée de manière à apporter de $0,1.10^{-3}$ à $100.10^{-3}$ atome-grammes de métal appartenant au groupe des lanthanides pour 100 g de polyamide.

5. Compositions selon l'une quelconque des revendications 1 à 4, caractérisées en ce qu'elles renferment du phosphore rouge en proportions comprises entre 1 et 30 % en poids par rapport au poids du polyamide à ignifuger.

6. Compositions selon l'une quelconque des revendications 1 à 5, caractérisées en ce que le phosphore rouge se trouve sous forme de particules enrobées au moyen d'une pellicule de polymère.

7. Compositions selon la revendication 6, caractérisées en ce que le polymère d'enrobage est choisi dans le groupe constitué par : les résines époxy, des polymères ayant des liaisons insaturées maléiques, fumariques ou allyliques, des polyesters saturés, des polycondensats phénol-formaldéhyde thermoplastiques, des polycondensats phénolisobutyraldéhyde.

8. Compositions selon l'une quelconque des revendications 1 à 7, caractérisées en ce qu'elles comprennent, en outre, des fibres de verre en quantité variant de 10 à 60 % par rapport au poids du polyamide de la composition.

9. Objets conformés préparés à partir des compositions selon l'une quelconque des revendications 1 à 8.

**Revendications pour l'Etat contractant suivant : ES**

1. Procédé de préparation de compositions à base de polyamide ignifugé au moyen de phosphore rouge et comprenant au moins un composé à base de lanthanide ou d'yttrium, consistant à mettre en oeuvre les étapes suivantes :

   - on réalise d'abord, en opérant à froid, un pré-mélange dans un mélangeur classique du polyamide de base et du phosphore rouge avec au moins un composé à base de lanthanide et d'ythrium, ces constituants étant mis en oeuvre sous forme de poudre ou de granulés et leurs quantités étant ajustées dans cette première étape de manière à apporter de 1 à 30 % en poids de phosphore rouge par rapport au poids du polyamide à ignifuger et de $0,1.10^{-3}$ à $100.10^{-3}$ atome-grammes de métal appartenant au groupe des lanthanides pour 100 g de polyamide,

   - puis on homogénise ensuite l'ensemble obtenu par malaxage à une température supérieure à 200°C dans une extrudeuse à une ou plusieurs vis, ledit procédé étant caractérisé en ce que les constituants mis en oeuvre dans la première étape comprennent en outre un stabilisant particulier consistant dans au moins une hydrotalcite de formule générale :

$$Mg_{(1-a)}Al_a(OH)_2\, A_{a/2},\, pH_2O \qquad (I)$$

   dans laquelle :
   . A représente l'anion $SO_4^{2-}$ ou $CO_3^{2-}$,
   . a est un nombre qui satisfait à la relation :
   $$0 < a < 0,5,$$
   . p est un nombre, représentant le nombre de molécules d'eau par molécule d'hydrotalcite, qui satisfait à la relation :
   $$0 < p < 1,$$
   la quantité d'hydrotalcite(s) mis en oeuvre étant comprise entre 0,1 et 5 % en poids par rapport au poids du polyamide contenu dans la composition.

2. Procédé selon la revendication 1, caractérisé en ce que le polyamide est choisi dans le groupe constitué par : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide $\omega$ -aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

3. Procédé selon l'une quelconque des revendications 1 à 2, caractérisé en ce que le composé à base de lanthanide et d'yttrium consiste dans :

   - un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium ou d'yttrium ;

   - ou un mélange de dérivés organiques et/ou inorganiques de plusieurs de ces éléments.

4. Procédé selon l'une quelconque des revendications 1 à 3, caractérisé en ce que le phosphore rouge se trouve sous forme de particules enrobées au moyen d'une pellicule de polymère.

5. Procédé selon la revendication 4, caractérisé en ce que le polymère d'enrobage est choisi dans le groupe constitué par : les résines époxy, des polymères ayant des liaisons insaturées maléiques, fumariques ou allyliques, des polyesters saturés, des polycondensats phénol-formaldéhyde thermoplastiques, des polycondensats phénol-isobutyraldéhyde.

6. Procédé selon l'une quelconque des revendications 1 à 5, caractérisé en ce que les constituants mis en oeuvre dans la première étape comprennent en outre des fibres de verre en quantité variant de 10 à 60 % par rapport au poids du polyamide.

**Patentansprüche**

**Patentansprüche für folgende Vertragsstaaten : AT, BE, CH, DE, FR, GB, GR, IT, LI, LU, NL, SE**

1. Zusammensetzungen auf der Basis von Polyamid, das mittels rotem Phosphor flammwidrig gemacht wurde und mindestens eine Verbindung auf Lanthanid- oder Yttrium-Basis umfaßt, dadurch gekennzeichnet, daß sie außerdem 0,1 bis 5 Gew.-%, bezogen auf das Gewicht des in der Zusammensetzung enthaltenen Polyamids, mindestens eines Hydrotalkits der allgemeinen Formel:

$$Mg_{(1-a)}Al_a(OH)_2\ A_{a/2},\ pH_2O \qquad (I)$$

   in der:
   - A das Anion $SO_4^{2-}$ oder $CO_3^{2-}$ darstellt,
   - a eine Zahl ist, die die Bedingung:

     $$0 < a < 0,5$$

     erfüllt,
   - p eine Zahl ist, die die Zahl der Wassermoleküle pro Molekül Hydrotalkit darstellt, welche die Bedingung

     $$0 < p < 1$$

     erfüllt,
   umfassen.

2. Zusammensetzungen nach Anspruch 1, dadurch gekennzeichnet, daß das Polyamid aus der Gruppe ausgewählt ist, die besteht aus: den durch Polykondensation von gesättigten aliphatischen Dicarbonsäuren mit 6 bis 12 Kohlenstoffatomen mit bisprimären gesättigten aliphatischen Diaminen mit 6 bis 12 Kohlenstoffatomen erhaltenen Polyamiden; den entweder durch direkte Homopolykondensation von $\omega$ -Aminoalkansäure, die eine Kohlenwasserstoffkette mit 4 bis 12 Kohlenstoffatomen trägt, oder durch hydrolytische Öffnung und Polymerisation von Lactamderivaten dieser Säuren erhaltenen Polyaminosäuren; den Copolyamiden, die ausgehend von am Ausgangspunkt der vorgenannten Polyamide stehenden Monomeren erhalten werden, wobei der saure Bestandteil dieser Copolyamide außerdem teilweise aus Terephthal- und/oder Isophthalsäure bestehen kann; und den Mischungen derselben Polyamide.

3. Zusammensetzungen nach irgendeinem der Ansprüche 1 bis 2, dadurch gekennzeichnet, daß die Verbindung auf Lanthanid- und Yttrium-Basis besteht aus:
   - einem organischen oder anorganischen Derivat irgendeines der Lanthaniden: Cer, Lanthan, Praseodym, Neodym, Promethium, Samarium, Europium, Gadolinium, Terbium, Dysprosium, Holmium, Erbium, Ytterbium, Thulium, Lutetium oder von Yttrium
   - oder einer Mischung organischer und/oder anorganischer Derivate von mehreren dieser Elemente.

4. Zusammensetzungen nach irgendeinem der Ansprüche 1 bis 3, dadurch gekennzeichnet, daß die verwendete Menge der Verbindung(en) auf Lanthanid- und Yttrium-Basis so festgelegt ist, daß sie $0,1.10^{-3}$ bis $100.10^{-3}$ Grammatom Metall, das der Gruppe der Lanthaniden angehört, auf 100 g Polyamid beiträgt.

5. Zusammensetzungen nach irgendeinem der Ansprüche 1 bis 4, dadurch gekennzeichnet, daß sie roten Phosphor in Anteilen, die zwischen 1 und 30 Gew.-%, bezogen auf das Gewicht des flammwidrig zu machenden Polyamids, eingeschlossen liegen, einschließen.

6. Zusammensetzungen nach irgendeinem der Ansprüche 1 bis 5, dadurch gekennzeichnet, daß der rote Phosphor in Form von mittels eines Polymerfilms umhüllten Teilchen vorliegt.

7. Zusammensetzungen nach Anspruch 6, dadurch gekennzeichnet, daß das Umhüllungspolymer aus der aus den Epoxyharzen, Polymeren mit ungesättigten maleinischen, fumarischen oder allylischen Bindungen, gesättigten Polyestern, thermoplastischen Phenol-Formaldehyd-Polykondensaten, Phenol-Isobutyraldehyd-Polykondensaten bestehenden Gruppe ausgewählt ist.

8. Zusammensetzungen nach irgendeinem der Ansprüche 1 bis 7, dadurch gekennzeichnet, daß sie außerdem Glasfasern in einer Menge, die von 10 bis 60%, bezogen auf das Gewicht des Polyamids der Zusammensetzung, variiert, umfassen.

9. Formkörper, hergestellt ausgehend von den Zusammensetzungen gemäß irgendeinem der Ansprüche 1 bis 8.

**Patentansprüche für folgenden Vertragsstaat : ES**

1. Verfahren zur Herstellung von Zusammensetzungen auf der Basis von Polyamid, das mittels rotem Phosphor flammfest gemacht wird und mindestens eine Verbindung auf Lanthanid- oder Yttrium-Basis umfaßt, bestehend aus der Durchführung der folgenden Schritte:
   - man stellt zunächst unter Arbeiten in der Kälte in einer klassischen Mischapparatur eine Vormischung des Basis-Polyamids und des roten Phosphors mit mindestens einer Verbindung auf Lanthanid- und Yttrium-Basis her, wobei diese Bestandteile in Form von Pulver oder von Körnchen verwendet werden und ihre Mengen in diesem ersten Schritt so eingestellt werden, daß sie 1 bis 30 Gew.-% an rotem Phosphor, bezogen auf das Gewicht des flammwidrig zu machenden Polyamids, und $0,1.10^{-3}$ bis $100.10^{-3}$ Grammatom Metall, das der Gruppe der Lanthaniden angehört, auf 100 g Polyamid beitragen,
   - dann homogenisiert man anschließend die erhaltene Masse durch Kneten in einem Extruder mit einer oder mehreren Schnecken oberhalb von 200°C,

   wobei das Verfahren dadurch gekennzeichnet ist, daß die in dem ersten Schritt verwendeten Bestandteile außerdem einen speziellen Stabilisator umfassen, welcher aus mindestens einem Hydrotalkit der allgemeinen Formel:

   $$Mg_{(1-a)}Al_a(OH)_2\,A_{a/2},\,pH_2O \qquad (I)$$

   in der:
   - A das Anion $SO_4^{2-}$ oder $CO_3^{2-}$ darstellt,
   - a eine Zahl ist, die die Bedingung:

     $0 < a < 0,5$

     erfüllt,
   - p eine Zahl ist, die die Zahl der Wassermoleküle pro Molekül Hydrotalkit darstellt, welche die Bedingung

     $0 < p < 1$

     erfüllt,

   besteht,
   wobei die Menge des (der) verwendeten Hydrotalkits (Hydrotalkite) zwischen 0,1 und 5 Gew.-%, bezogen auf das Gewicht des in der Zusammensetzung enthaltenen Polyamids, eingeschlossen ist.

2. Verfahren nach Anspruch 1, dadurch gekennzeichnet, daß das Polyamid aus der Gruppe ausgewählt ist, die besteht aus: den durch Polykondensation von gesättigten aliphatischen Dicarbonsäuren mit 6 bis 12 Kohlenstoffatomen mit bisprimären gesättigten aliphatischen Diaminen mit 6 bis 12 Kohlenstoffatomen erhaltenen Polyamiden; den entweder durch direkte Homopolykondensation von ω-Aminoalkansäure, die eine Kohlenwasserstoffkette mit 4 bis 12 Kohlenstoffatomen trägt, oder durch hydrolytische Öffnung und Polymerisation von Lactamderivaten dieser Säuren erhaltenen Polyaminosäuren; den Copolyamiden, die ausgehend von am Ausgangspunkt der vorgenannten Polyamide stehenden Monomeren erhalten werden, wobei der saure Bestandteil dieser Copolyamide außerdem teilweise aus Terephthal- und/oder Isophthalsäure bestehen kann; und den Mischungen derselben Polyamide.

3. Verfahren nach irgendeinem der Ansprüche 1 bis 2, dadurch gekennzeichnet, daß die Verbindung auf Lanthanid- und Yttrium-Basis besteht aus:
   - einem organischen oder anorganischen Derivat irgendeines der Lanthaniden: Cer, Lanthan, Praseodym, Neodym, Promethium, Samarium, Europium, Gadolinium, Terbium, Dysprosium, Holmium, Erbium, Ytterbium, Thulium, Lutetium oder von Yttrium
   - oder einer Mischung organischer und/oder anorganischer Derivate von mehreren dieser Elemente.

4. Verfahren nach irgendeinem der Ansprüche 1 bis 2, dadurch gekennzeichnet, daß der rote Phosphor in Form von mittels eines Polymerfilms umhüllten Teilchen vorliegt.

5. Verfahren nach Anspruch 4, dadurch gekennzeichnet, daß das Umhüllungspolymer aus der aus den Epoxyharzen, Polymeren mit ungesättigten maleinischen, fumarischen oder allylischen Bindungen, gesättigten Polyestern, thermoplastischen Phenol-Formaldehyd-Polykondensaten, Phenol-Isobutyraldehyd-Polykondensaten bestehenden Gruppe ausgewählt ist.

6. Verfahren nach irgendeinem der Ansprüche 1 bis 5, dadurch gekennzeichnet, daß die in der ersten Stufe verwendeten Bestandteile außerdem Glasfasern in einer Menge, die von 10 bis 60%, bezogen auf das Gewicht des Polyamids, variiert, umfassen.

**Claims**

**Claims for the following Contracting States : AT, BE, CH, DE, FR, GB, GR, IT, LI, LU, NL, SE**

1. Compositions based on polyamide made fire-resistant by means of red phosphorus and comprising at least one lanthanide- or yttrium- based compound, characterised in that they additionally comprise from 0.1 to 5 % by weight, relative to the weight of the polyamide present in the composition, of at least one hydrotalcite of general formula:

$$Mg_{(1-a)}Al_a(OH)_2A_{a/2}.pH_2O \qquad (I)$$

in which:

A denotes the anion $SO_4{}^{2-}$ or $CO_3{}^{2-}$,

a is a number which satisfies the relationship:

$0 < a < 0.5$,

p is a number representing the number of molecules of water per molecule of hydrotalcite, which satisfies the relationship:

$0 < p < 1$.

2. Compositions according to Claim 1, characterised in that the polyamide is chosen from the group consisting of: the polyamides obtained by polycondensation of saturated aliphatic dicarboxylic acids containing from 6 to 12 carbon atoms with saturated aliphatic diprimary diamines containing from 6 to 12 carbon atoms, polyamino-acids obtained either by direct homopolycondensation of $\omega$-aminoalkanoic acid comprising a hydrocarbon chain containing from 4 to 12 carbon atoms, or by hydrolytic opening and polymerisation of the lactams derived from these acids, the copolyamides obtained from the starting monomers of the abovementioned polyamides, it being additionally possible for the acidic component of these copolyamides to consist partly of terephthalic acid and/or of isophthalic acid, and mixtures of such polyamides.

3. Compositions according to either of Claims 1 to 2, characterised in that the lanthanide- and yttrium- based compound consists of:
   - an organic or inorganic derivative of any one of the lanthanides: cerium, lanthanum, praseodymium, neodymium, promethium, samarium, europium, gadolinium, terbium, dysprosium, holmium, erbium, ytterbium, thulium, lutetium or of yttrium;
   - or a mixture of organic and/or inorganic derivatives of a number of these elements.

4. Compositions according to any one of Claims 1 to 3, characterised in that the quantity of lanthanide- and yttrium- based compound(s) which is used is determined so as to contribute from $0.1 \times 10^{-3}$ to $100 \times 10^{-3}$ gram-atoms of metal belonging to the lanthanide group per 100 g of polyamide.

5. Compositions according to any one of Claims 1 to 4, characterised in that they contain red phosphorus in proportions of between 1 and 30 % by weight relative to the weight of the polyamide to be made fire-resistant.

6. Compositions according to any one of Claims 1 to 5, characterised in that the red phosphorus is in the form of particles coated with a film of polymer.

7. Compositions according to Claim 6, characterised in that the coating polymer is chosen from the group consisting of: epoxy resins, polymers containing maleic, fumaric or allyl unsaturated bonds, saturated polyesters, thermoplastic phenol-formaldehyde polycondensates and phenol-isobutyraldehyde polycondensates.

8. Compositions according to any one of Claims 1 to 7, characterised in that they additionally contain glass fibres in a quantity varying from 10 to 60 % relative to the weight of the polyamide of the composition.

9. Shaped objects prepared from compositions according to any one of Claims 1 to 8.

**Claims for the following Contracting State : ES**

1. Process for the preparation of compositions based on polyamide made fire-resistant by means of red phosphorus and comprising at least one lanthanide- or yttrium- based compound, consisting in carrying out the following stages:
   - a premix of the base polyamide and of red phosphorus with at least one lanthanum- or yttrium- based compound is produced first, the operation being performed cold, in a conventional mixer, these constituents being employed in the form of powder or of granules and their quantities being adjusted in this first stage so as to contribute from 1 to 30 % by weight of red phosphorus relative to the weight of the polyamide to be made fire-resistant and from $0.1 \times 10^{-3}$ to $100 \times 10^{-3}$ gram-atoms of metal belonging to the lanthanide group per 100 g of polyamide,
   - the combination obtained is next homogenised by blending at a temperature higher than 200°C in a single- or multiscrew extruder, the said process being characterised in that the constituents employed in the first step additionally comprise a particular stabiliser consisting of at least one hydrotalcite of general formula:

$$Mg_{(1-a)}Al_a(OH)_2A_{a/2}.pH_2O \qquad (I)$$

   in which:

   A denotes the anion $SO_4^{2-}$ or $CO_3^{2-}$,

   a is a number which satisfies the relationship:

   $$0 < a < 0.5,$$

   p is a number representing the number of molecules of water per molecule of hydrotalcite, which satisfies the relationship:

   $$0 < p < 1,$$

   the quantity of hydrotalcite(s) employed being between 0.1 and 5 % by weight relative to the weight of the polyamide present in the composition.

2. Process according to Claim 1, characterised in that the polyamide is chosen from the group consisting of: the polyamides obtained by polycondensation of saturated aliphatic dicarboxylic acids containing from 6 to 12 carbon atoms with saturated aliphatic diprimary diamines containing from 6 to 12 carbon atoms, polyamino-acids obtained either by direct homopolycondensation of ω-aminoalkanoic acid comprising a hydrocarbon chain containing from 4 to 12 carbon atoms, or by hydrolytic opening and polymerisation of the lactams derived from these acids, the copolyamides obtained from the starting monomers of the abovementioned polyamides, it being additionally possible for the acidic component of these copolyamides to consist partly of terephthalic acid and/or of isophthalic acid, and mixtures of such polyamides.

3. Process according to either of Claims 1 to 2, characterised in that the lanthanide- and yttrium- based compound consists of:
   - an organic or inorganic derivative of any one of the lanthanides: cerium, lanthanum, praseodymium, neodymium, promethium, samarium, europium, gadolinium, terbium, dysprosium, holmium, erbium, ytterbium, thulium, lutetium or of yttrium;
   - or a mixture of organic and/or inorganic derivatives of a number of these elements.

4. Process according to any one of Claims 1 to 3, characterised in that the red phosphorus is in the form of particles coated with a film of polymer.

5. Process according to Claim 4, characterised in that the coating polymer is chosen from the group consisting of: epoxy resins, polymers containing maleic, fumaric or allyl unsaturated bonds, saturated polyesters, thermoplastic phenol-formaldehyde polycondensates and phenol-isobutyraldehyde polycondensates.

6. Process according to any one of Claims 1 to 5, characterised in that the constituents employed in the first step additionally contain glass fibres in a quantity varying from 10 to 60 % relative to the weight of the polyamide.